# EUROPEAN PATENT APPLICATION

(11) **EP 4 815 261 A1**
(43) Date of publication of application: **30.09.2026**
(21) Application number: 26168045.8
(22) Date of filing: 26.03.2026
(51) Int. Cl.: H02K 1/14, H02K 1/276, H02K 21/16

(54) **POWER TOOL INCLUDING A HIGH-POWER MOTOR**

(30) Priority: 26.03.2025 US 202563777949 P; 02.06.2025 US 202563816273 P; 14.10.2025 US 202563898737 P
(71) Applicant: Milwaukee Electric Tool Corporation, Brookfield, WI 53005-2550 (US)
(72) Inventor: Modi, Preet Parag, 53005 Brookfield, WI (US); Jubeck, John M., 53005 Brookfield, WI (US); Edwards, Jacob A., 53005 Brookfield, WI (US); Paulsen, Alexander J., 53005 Brookfield, WI (US)
(74) Representative: Grünecker Patent- und Rechtsanwälte PartG mbB

(57) **Abstract**

A power tool including a housing and a motor supported within the housing. The motor includes a stator and a rotor. The rotor is disposed within the stator. The stator includes a stator lamination stack including an external wall, a plurality of stator teeth, and a plurality of stator windings, wherein a length of the stator lamination stack is approximately 6.00mm to 15.00mm. The plurality of stator teeth extend radially inward from the external wall. The rotor includes a rotor lamination stack including a plurality of magnet slots and a plurality of magnets. A length of the rotor lamination stack is approximately 6.00mm to 15.00mm. Each magnet of the plurality of magnets is disposed within a magnet slot of the plurality of magnet slots. A ratio of a stator tooth width to an external wall thickness of the stator is approximately 1.8 to 2.5.

## Description

### RELATED APPLICATIONS

This application claims the benefit of U.S. Provisional Patent Application No. 63/898,737, filed October 14, 2025, U.S. Provisional Patent Application No. 63/816,273, filed June 2, 2025, and U.S. Provisional Patent Application No. 63/777,949, filed March 26, 2025, and the entire content of each of which is hereby incorporated by reference.

### FIELD

This disclosure relates to power tool motors.

### SUMMARY

Embodiments described herein relate to power tools that include a high-power motor that provides increased power output and efficiency when compared to comparably-sized existing motors.

Motor assemblies described herein include a stator and a rotor. The stator includes a stator lamination stack including an external wall, wherein a length of the stator lamination stack is approximately 6.0 millimeters (mm) to 15.00mm, a plurality of stator teeth extending radially inward from the external wall, and a plurality of stator windings. The rotor is disposed within the stator. The rotor includes a rotor lamination stack including a plurality of magnet slots, wherein a length of the rotor lamination stack is approximately 6.00mm to 15.00mm, and a plurality of magnets, wherein each magnet of the plurality of magnets is disposed within a magnet slot of a plurality of magnet slots. A ratio of a stator tooth width to an external wall thickness of the stator is approximately 1.8 to 2.5.

In some aspects, an outer diameter of the stator is approximately 50mm.

In some aspects, an outer diameter of the stator is selected from a group consisting of: 40mm, 45mm, 60mm, 70mm, and 80mm.

In some aspects, a width of the plurality of stator teeth is approximately 6.00mm to 7.00mm.

In some aspects, a height of the plurality of stator teeth is approximately 5.50mm to 7.00mm.

In some aspects, a thickness of the external wall is less than or equal to approximately 3.10mm.

In some aspects, the thickness of the external wall is greater than approximately 1.00mm.

In some aspects, the stator includes a plurality of slots formed by the external wall and the plurality of stator teeth.

In some aspects, an area of each of slot of the plurality of slots is at least approximately 80.00mm², and wherein an outer diameter of the stator is approximately 50mm.

In some aspects, the stator includes a stator insulator covering the stator lamination stack, the stator insulator including an exterior portion and an interior portion.

In some aspects, a thickness of the exterior portion is less than approximately 0.25mm.

In some aspects, a thickness of the interior portion is less than approximately 0.20mm.

In some aspects, a width of the plurality of magnets is approximately 3.00mm to 4.00mm.

In some aspects, a length of the plurality of magnets is approximately 6.00mm to 15.00mm.

In some aspects, the ratio of the stator tooth width to the external wall thickness of the stator is approximately 1.9.

Motor assemblies described herein include a stator, and a rotor disposed within the stator. The rotor includes a rotor lamination stack includes a plurality of magnet slots, wherein a length of the rotor lamination stack is greater than approximately 8.00mm, and a plurality of magnets, wherein each magnet of the plurality of magnets is disposed within a magnet slot of the plurality of magnet slots.

Motor assemblies described herein include a stator and a rotor. The stator includes a stator lamination stack includes an external wall, wherein a length of the stator lamination stack is greater than approximately 8.00mm, a plurality of stator teeth extending radially inward from the external wall, and a plurality of stator windings. The rotor is disposed within the stator. A ratio of a stator tooth width to an external wall thickness of the stator is approximately 1.8 to 2.5.

Power tools described herein include a housing and a motor supported within the housing. The motor includes a stator and a rotor. The rotor is disposed within the stator. The stator includes a stator lamination stack including an external wall, a plurality of stator teeth, and a plurality of stator windings, wherein a length of the stator lamination stack is approximately 6.00mm to 15.00mm. The plurality of stator teeth extend radially inward from the external wall. The rotor includes a rotor lamination stack including a plurality of magnet slots and a plurality of magnets. A length of the rotor lamination stack is approximately 6.00mm to 15.00mm. Each magnet of the plurality of magnets is disposed within a magnet slot of the plurality of magnet slots. A ratio of a stator tooth width to an external wall thickness of the stator is approximately 1.8 to 2.5.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the disclosure will become apparent by consideration of the detailed description and accompanying drawings.

### BRIEF DESCRIPTION OF THE DRAWINGS

FIG. 1 illustrates a perspective view of a power tool, according to some embodiments.
FIG. 2 illustrates a block diagram of a control system of the power tool of FIG. 1, according to some embodiments.
FIG. 3 illustrates a battery pack for use with the power tool of FIG. 1, according to some embodiments.
FIG. 4 illustrates a block diagram of a control system of the battery pack of FIG. 3, according to some embodiments.
FIG. 5 illustrates a perspective view of a power tool motor, according to embodiments described herein.
FIG. 6 illustrates a side view of the power tool motor of FIG. 5, according to embodiments described herein.
FIG. 7 illustrates a top view of the power tool motor of FIG. 5, according to embodiments described herein.
FIG. 8 illustrates a bottom view of the power tool motor of FIG. 5, according to embodiments described herein.
FIG. 9 illustrates a perspective view of a stator of the power tool motor of FIG. 5, according to embodiments described herein.
FIG. 10 illustrates a top view of the stator of the power tool motor of FIG. 5, according to embodiments described herein.
FIG. 11 illustrates a top view of a stator insulator of the stator of FIG. 10, according to embodiments described herein.
FIG. 12 illustrates a top view of a stator lamination stack of the stator of FIG. 10, according to embodiments described herein.
FIG. 13 illustrates a partial section view of the stator of the power tool motor of FIG. 5, according to embodiments described herein.
FIG. 14 illustrates a partial top view of the stator lamination stack of the stator of FIG. 10, according to embodiments described herein.
FIG. 15 illustrates a perspective view of a rotor of the power tool motor of FIG. 5, according to embodiments described herein.
FIG. 16 illustrates a side view of a rotor of the power tool motor of FIG. 5, according to embodiments described herein.
FIG. 17 illustrates a perspective view of a rotor of the power tool motor of FIG. 5, according to embodiments described herein.
FIG. 18 illustrates a top view of a rotor of the power tool motor of FIG. 5, according to embodiments described herein.
FIG. 19 is a graph illustrating performance characteristics of motors described herein.
FIG. 20 is a graph illustrating performance characteristics of motors described herein.
FIG. 21 is a graph illustrating thermal performance of motors described herein.

### DETAILED DESCRIPTION

Embodiments described herein related to power tools that include a motor that includes improved motor performance. The improved motor performance is achieved with the motor having substantially the same motor envelope (e.g., size dimensions) or a smaller motor envelope.

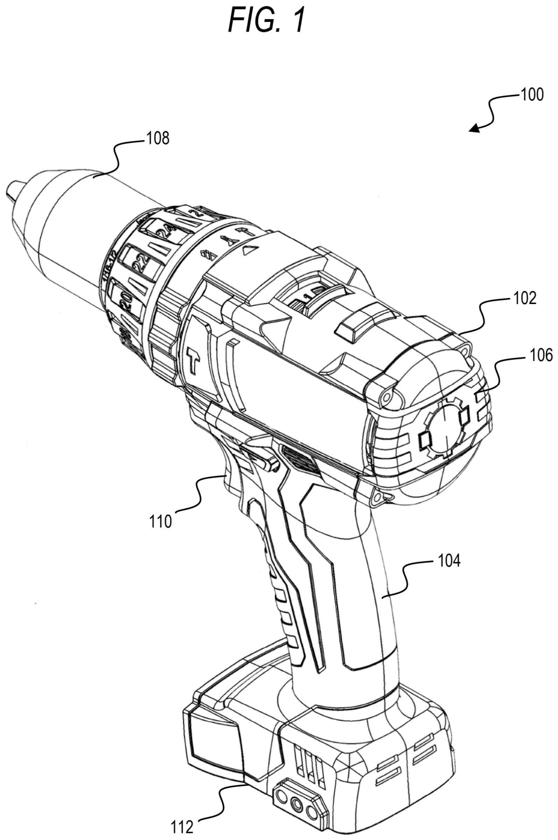

FIG. 1 illustrates a power tool 100 including a motor (also referred to as a motor assembly). The power tool 100 is, for example, a hammer drill including a housing 102. Although FIG. 1 illustrates a hammer drill, in some embodiments, the components described herein are incorporated into other types of power tools including drill-drivers, impact drivers, impact wrenches, angle grinders, circular saws, reciprocating saws, plate compactors, core drills, string trimmers, leaf blowers, vacuums, or other applicable applications that may use field weakening for motor operation. The housing 102 includes a handle portion 104 and motor housing portion 106. The power tool 100 further includes an output driver 108 (illustrated as a chuck), a trigger 110, and a battery pack interface 112. The battery pack interface 112 is configured to mechanically and electrically connect to or receive a power tool battery pack. In a power tool, such as power tool 100, switching elements are selectively enabled and disabled by control signals from a controller to selectively apply power from a power source (e.g., battery pack) to drive a motor.

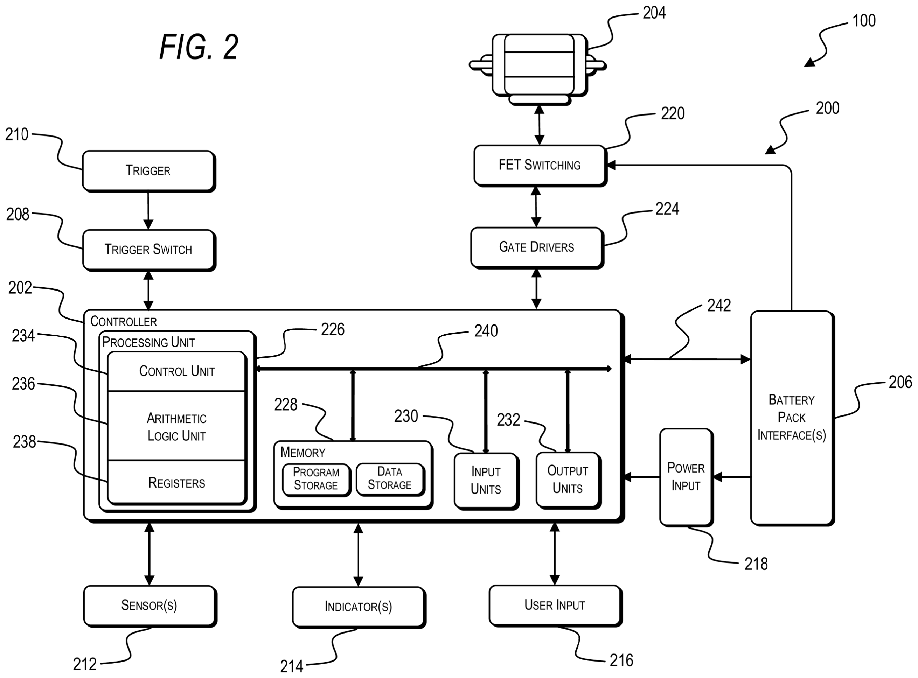

FIG. 2 illustrates a control system 200 for the power tool 100. The control system 200 includes a controller 202. The controller 202 is electrically and/or communicatively connected to a variety of modules or components of the power tool 100. For example, the illustrated controller 202 is electrically connected to a motor 204, a battery pack interface 206, a trigger switch 208 (connected to a trigger 210), one or more sensors or sensing circuits 212, one or more indicators 214, a user input module 216, a power input module 218, an inverter bridge or FET switching module 220 (e.g., including a plurality of switching FETs), and gate drivers 224 for driving the FET switching module 220. The controller 202 includes combinations of hardware and software that are operable to, among other things, control the operation of the power tool 100, monitor the operation of the power tool 100, activate the one or more indicators 214 (e.g., an LED), etc.

The controller 202 includes a plurality of electrical and electronic components that provide power, operational control, and protection to the components and modules within the controller 202 and/or the power tool 100. For example, the controller 202 includes, among other things, a processing unit 226 (e.g., a microprocessor, a microcontroller, an electronic controller, an electronic processor, or another suitable programmable device), a memory 228, input units 230, and output units 232. The processing unit 226 includes, among other things, a control unit 234, an arithmetic logic unit ("ALU") 236, and a plurality of registers 238, and is implemented using a known computer architecture (e.g., a modified Harvard architecture, a von Neumann architecture, etc.). The processing unit 226, the memory 228, the input units 230, and the output units 232, as well as the various modules or circuits connected to the controller 202 are connected by one or more control and/or data buses (e.g., common bus 240). The control and/or data buses are shown generally in FIG. 2 for illustrative purposes. The use of one or more control and/or data buses for the interconnection between and communication among the various modules, circuits, and components would be known to a person skilled in the art in view of the invention described herein.

In some embodiments, the controller 202 is configured to control the gate drivers 224 to drive the motor 204 using a sensored or sensorless field-oriented control ("FOC") motor control technique.

The memory 228 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 226 is connected to the memory 228 and executes software instructions that are capable of being stored in a RAM of the memory 228 (e.g., during execution), a ROM of the memory 228 (e.g., on a generally permanent basis), or another non-transitory computer readable medium such as another memory or a disc. Software included in the implementation of the power tool 100 can be stored in the memory 228 of the controller 202. The software includes, for example, firmware, one or more applications, program data, filters, rules, one or more program modules, and other executable instructions. The controller 202 is configured to retrieve from the memory 228 and execute, among other things, instructions related to the control processes and methods described herein. In other constructions, the controller 202 includes additional, fewer, or different components.

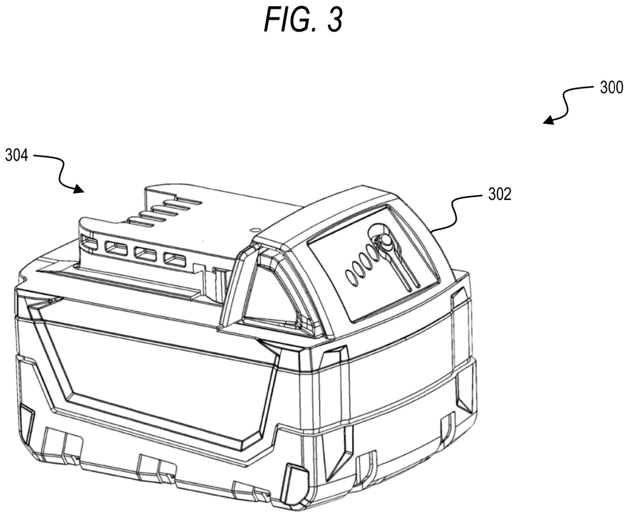

The battery pack interface 206 includes a combination of mechanical components (e.g., rails, grooves, latches, etc.) and electrical components (e.g., one or more terminals) configured to and operable for interfacing (e.g., mechanically, electrically, and communicatively connecting) with a battery pack. For example, power provided by a battery pack 300 (see FIG. 3) to the power tool 100 is provided through the battery pack interface 206 to the power input module 218. The power input module 218 includes combinations of active and passive components to regulate or control the power received from the battery pack 300 prior to power being provided to the controller 202. The battery pack interface 206 also supplies power to the FET switching module 220 to be switched by the switching FETs to selectively provide power to the motor 204. The battery pack interface 206 also includes, for example, a communication line 242 for providing a communication line or link between the controller 202 and the battery pack 300.

The sensing circuit 212 include one or more current sensors, one or more speed sensors, one or more Hall effect sensors, one or more temperature sensors, etc. The indicators 214 include, for example, one or more light-emitting diodes ("LEDs"). The indicators 214 can be configured to display conditions of, or information associated with, the power tool 100. For example, the indicators 214 are configured to indicate measured electrical characteristics of the power tool 100, the status of the power tool, the status the motor 204, etc. The user input module 216 is operably coupled to the controller 202 to, for example, select a forward mode of operation or a reverse mode of operation, a torque and/or speed setting for the power tool 100 (e.g., using torque and/or speed switches), etc. In some embodiments, the user input module 216 includes a combination of digital and analog input or output devices required to achieve a desired level of operation for the power tool 100, such as one or more knobs, one or more dials, one or more switches, one or more buttons, etc.

FIG. 3 illustrates a battery pack 300. The battery pack 300 includes a housing 302 and an interface portion 304 for connecting the battery pack 300 to a power tool, such as the power tool 100.

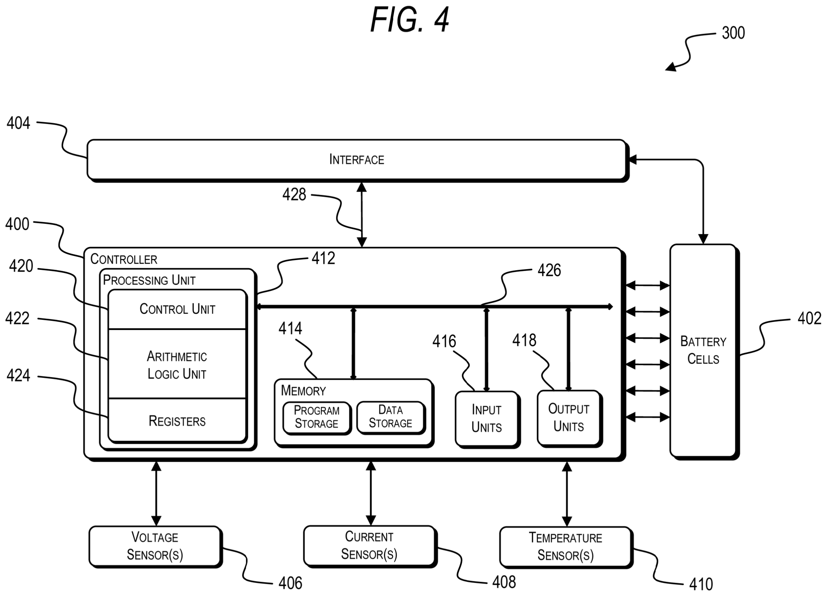

FIG. 4 illustrates a control system for the battery pack 300. The control system includes a controller 400. The controller 400 is electrically and/or communicatively connected to a variety of modules or components of the battery pack 300. For example, the illustrated controller 400 is connected to one or more battery cells 402 and an interface 404 (e.g., the interface portion 304 of the battery pack 300 illustrated in FIG. 3). The controller 400 is also connected to one or more voltage sensors or voltage sensing circuits 406, one or more current sensors or current sensing circuits 408, and one or more temperature sensors or temperature sensing circuits 410. The controller 400 includes combinations of hardware and software that are operable to, among other things, control the operation of the battery pack 300, monitor a condition of the battery pack 300, enable or disable charging of the battery pack 300, enable or disable discharging of the battery pack 300, etc.

The controller 400 includes a plurality of electrical and electronic components that provide power, operational control, and protection to the components and modules within the controller 400 and/or the battery pack 300. For example, the controller 400 includes, among other things, a processing unit 412 (e.g., a microprocessor, a microcontroller, an electronic processor, an electronic controller, or another suitable programmable device), a memory 414, input units 416, and output units 418. The processing unit 412 includes, among other things, a control unit 420, an ALU 422, and a plurality of registers 424, and is implemented using a known computer architecture (e.g., a modified Harvard architecture, a von Neumann architecture, etc.). The processing unit 412, the memory 414, the input units 416, and the output units 418, as well as the various modules or circuits connected to the controller 400 are connected by one or more control and/or data buses (e.g., common bus 426). The control and/or data buses are shown generally in FIG. 4 for illustrative purposes. The use of one or more control and/or data buses for the interconnection between and communication among the various modules, circuits, and components would be known to a person skilled in the art in view of the embodiments described herein.

The memory 414 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 412 is connected to the memory 414 and executes software instructions that are capable of being stored in a RAM of the memory 414 (e.g., during execution), a ROM of the memory 414 (e.g., on a generally permanent basis), or another non-transitory computer readable medium such as another memory or a disc. Software included in the implementation of the battery pack 300 can be stored in the memory 414 of the controller 400. The software includes, for example, firmware, one or more applications, program data, filters, rules, one or more program modules, and other executable instructions. The controller 400 is configured to retrieve from the memory 414 and execute, among other things, instructions related to the control processes and methods described herein. In other constructions, the controller 400 includes additional, fewer, or different components.

The interface 404 includes a combination of mechanical components (e.g., rails, grooves, latches, etc.) and electrical components (e.g., one or more terminals) configured to and operable for interfacing (e.g., mechanically, electrically, and communicatively connecting) the battery pack 300 with another device (e.g., a power tool, a battery pack charger, etc.). For example, the interface 404 is configured to communicatively connect to the controller 400 via a communications line 428.

The shape of the motor 204 can be manipulated to achieve a reduced amount of total harmonic distortion for the motor 204. Total harmonic distortion is a measure of total noise (e.g., higher frequency harmonics) as compared to a fundamental sine shape. Total harmonic distortion can be expressed as a percentage and can be used to quantify an extent to which a signal deviates from a pure sinusoidal waveform. The higher the percentage of total harmonic distortion, the more noise and vibrations that the motor 204 will produce. Back electromotive force ("back -EMF") refers to a voltage that is induced in the winding of the motor 204 due to the motor's rotation. In an ideal motor, the back-EMF of the motor 204 is a pure sinusoid. By reducing total harmonic distortion, the back-EMF can be made to be more sinusoidal (e.g., less distortion. Total harmonic distortion is measured, for example, at no load speed for the motor 204.

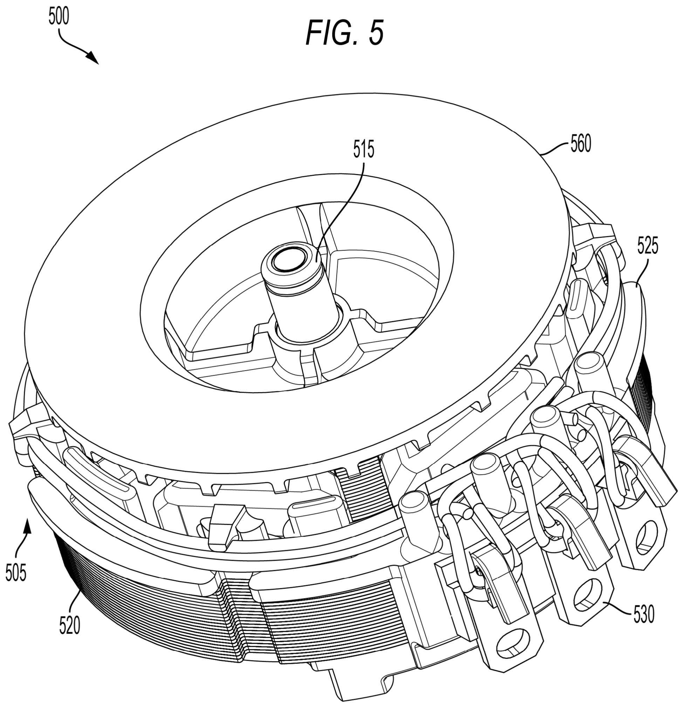

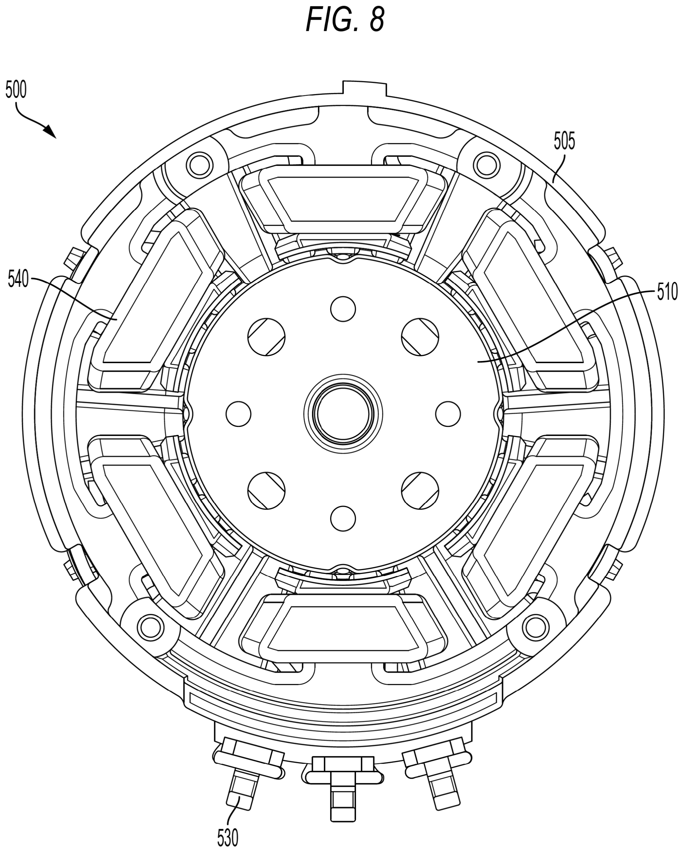

FIGS. 5-18 illustrates a motor 500 for use in the power tool 100. Referring now to FIG. 5, which includes an example illustration of a perspective view of the motor 500. The motor 500 includes a stator 505, a rotor 510 (see FIG. 8), and a rotor shaft 515. The stator 505 includes a stator lamination stack 520, a stator insulator 525, and a plurality of power terminals 530. In the illustrated embodiment, the motor 500 has a stator outer diameter of approximately 50.00 millimeters ("mm"). However, in other embodiments, the motor 500 can have different outer diameters (e.g., 40mm, 45mm, 60mm, 70mm, 80mm, etc.). The rotor 510 includes a fan 560.

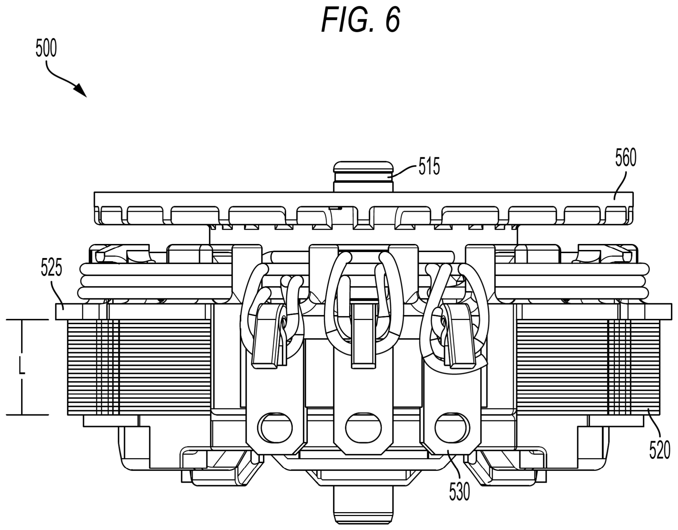

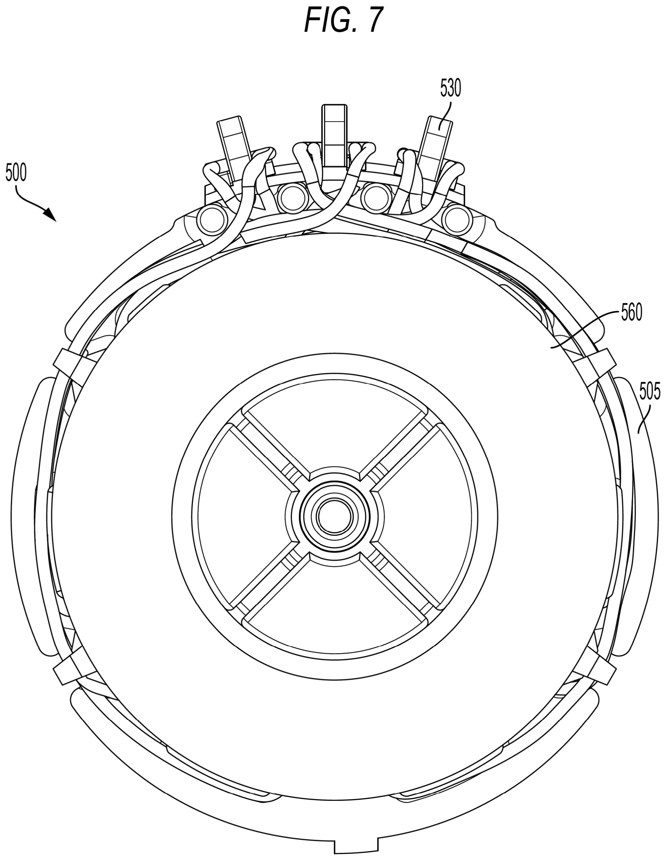

FIG. 6 illustrates a side view of the motor 500 for use in the power tool 100. The stator lamination stack 520 has a length, L. In some embodiments, the stator lamination stack 520 has a length of approximately 8.00mm. In other embodiments, the stator lamination stack 520 has a length of approximately 10.00mm. Compared to a stator lamination stack that is approximately 10.00mm long, reducing the length of the stator lamination stack to 8.00mm produces an approximately 20% reduction in the overall length of the motor 500. In some embodiments, the stator lamination stack 520 has a length of approximately 6.00mm to 15.00mm. FIG. 7 illustrates a top view of the motor 500 for use in the power tool 100.

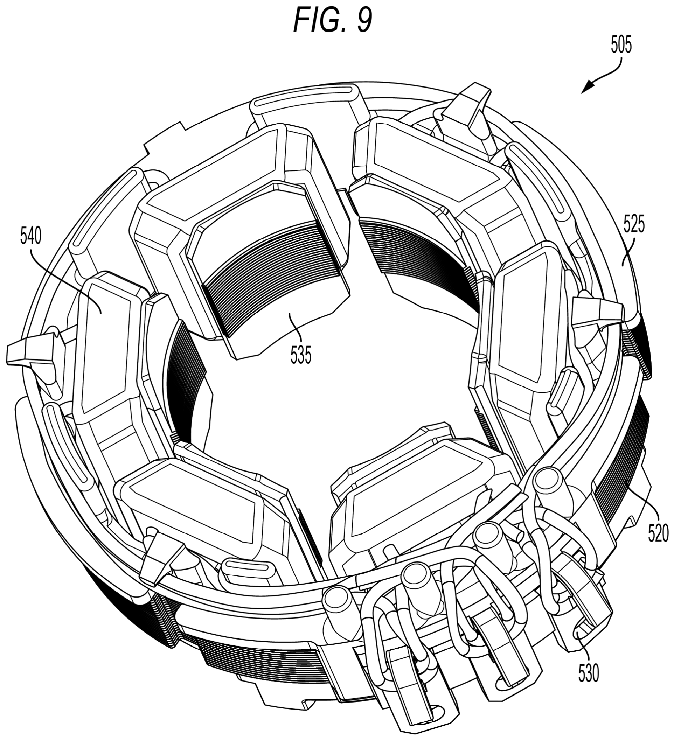

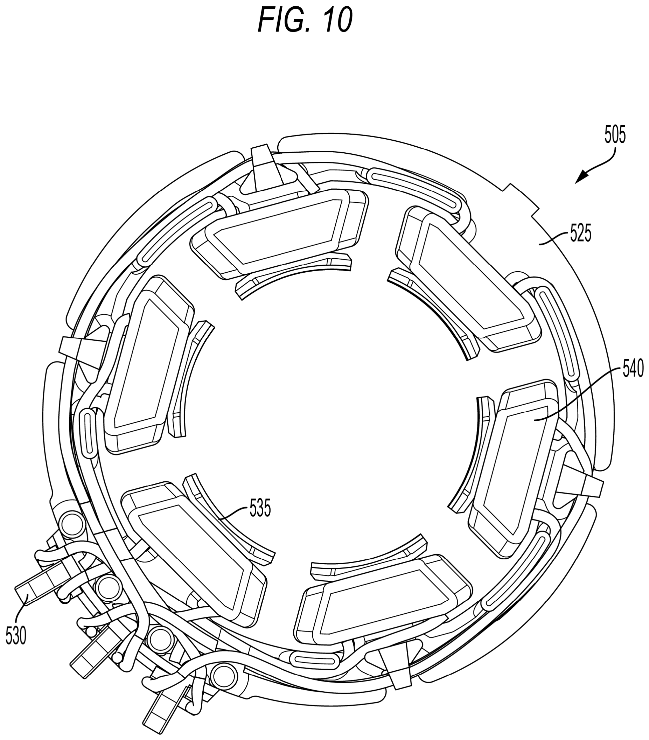

FIG. 8 illustrates a bottom view of the motor 500 for use in the power tool 100. The motor 500 includes the rotor 510. In some embodiments, the rotor 510 is disposed within the stator 505. The stator 505 also includes a plurality of stator windings 540. The stator 505 is described in greater detail with respect to FIGS. 9-14. FIG. 9 illustrates a perspective view of the stator 505 for use in the motor 500. The stator 505 includes a plurality of stator teeth 535. The plurality of stator windings 540 are wound around the plurality of stator teeth 535. FIG. 10 illustrates a top view of the stator 505 for use in the motor 500. The plurality of power terminals 530 are electrically connected to the plurality of stator windings 540 of the stator 505.

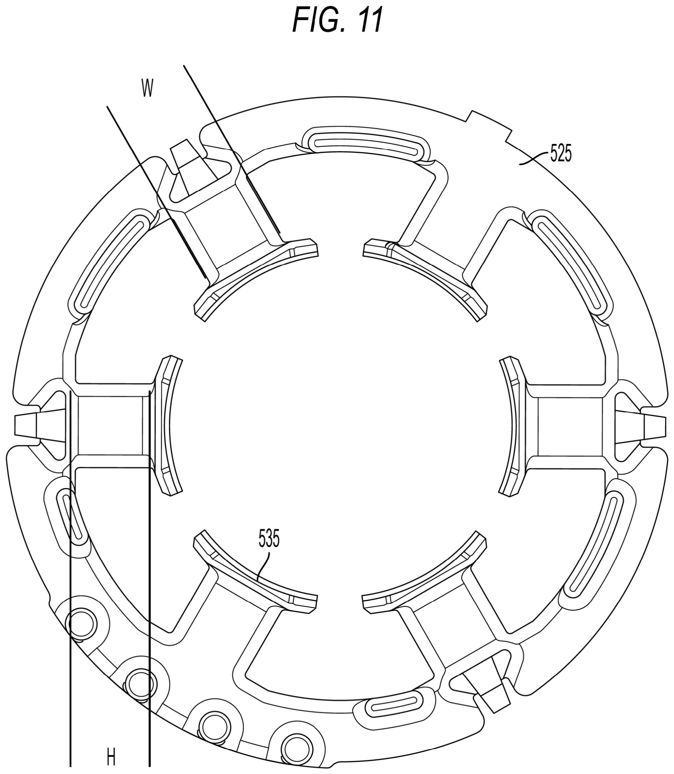

With reference to FIG. 11, the stator insulator 525 includes the plurality of stator teeth 535. In FIG. 11, the stator insulator 525 is shown in isolation with the other parts of the stator 505 being removed. The stator insulator 525 is made of a hard plastic material (e.g., polyamide 46, polyamide 66, nylon 46, liquid crystal polymer, etc.) that can, for example, be overmolded onto the stator lamination stack 520. In other embodiments, the stator insulator 525 can be made of other materials, such as ceramic, in order to reduce the thickness of the stator insulator. For example, a ceramic coating can be sprayed on the stator lamination stack 520 (e.g., rather than molding a plastic around the stator lamination stack 520). In some embodiments, the ceramic coating is an oxide ceramic coating. The stator insulator 525 includes a total of six teeth 535 that project inward (e.g., extending radially) from an exterior portion of the stator insulator 525. Each stator tooth 535 has a width, W, and a height, H. In some embodiments, the width of each stator tooth 535 is approximately 6.00mm to 7.00mm (e.g., 6.5mm). In some embodiments, the height of each stator tooth 535 is approximately 5.50mm to 7.00mm (e.g., 6.25mm).

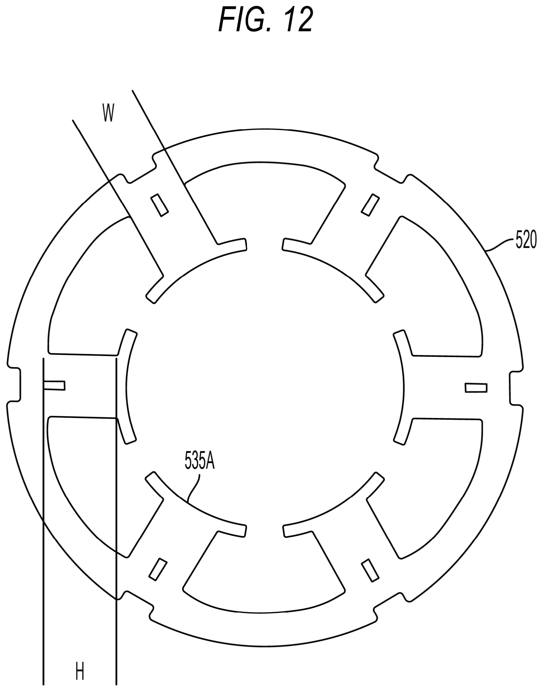

With reference to FIG. 12, the stator lamination stack 520 includes the plurality of stator teeth 535A. In FIG. 12, the stator lamination stack 520 is shown in isolation with the other parts of the stator 505 being removed. The stator lamination stack 520 is made of a plurality of metal (e.g., steel) laminations stacked together to form the stator lamination stack 520. The stator lamination stack 520 includes a total of six teeth 535A that project inward from an exterior portion of the stator lamination stack 520. Each stator tooth 535A has a width, W, and a height, H. In some embodiments, the width of each stator tooth 535A is approximately 5.00mm to 7.00mm (e.g., 6.25mm). In some embodiments, the height of each stator tooth 535A is approximately 6.00mm to 8.00mm (e.g., 6.75mm).

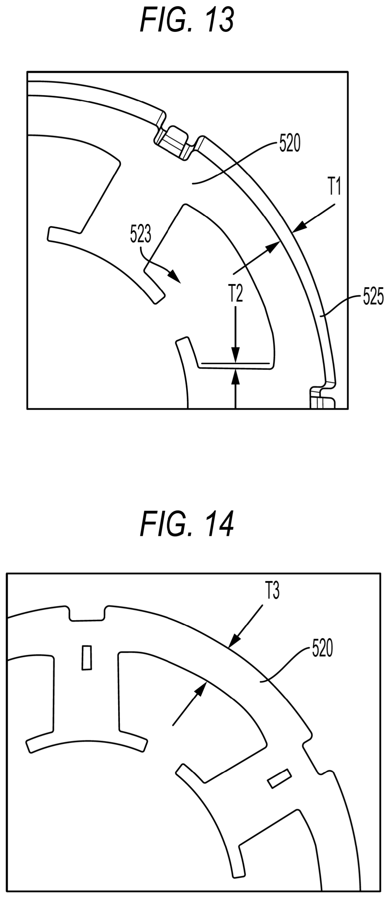

As illustrated in FIG. 13, when the stator lamination stack 520 is combined with the stator insulator 525, the stator insulator 525 is made to be a thin layer on top of the stator lamination stack 520. For example, in the illustrated embodiment, the thickness of the exterior portion of the stator insulator 525 is made to have a thickness, T1. In some embodiments, the thickness, T1, is approximately 0.25mm or less. In some embodiments, the thickness, T1, is approximately between 0.25mm and 0.05mm. Similarly, the thickness of the interior portion of the stator insulator 525 is made to have a thickness, T2. In some embodiments, the thickness, T2, is approximately 0.20mm or less. In some embodiments, the thickness, T2, is approximately between 0.30mm and 0.05mm. Additionally, as illustrated in FIG. 14, the stator lamination stack has an external wall thickness, T3. In some embodiments, the thickness, T3, is 3.60mm or less. In some embodiments, the thickness, T3, is approximately between 3.60mm and 1.00mm. By combining a reduced thickness, T1, a reduced thickness, T2, and a reduced thickness, T3, on the stator 505, the motor 500 is able to achieve an approximately 21% increase in the copper windings of the stator windings 540. For example, each copper slot 523 (i.e., space between adjacent stator teeth 535) in the stator 505 has an area of at least 80.00mm² for a stator with a 50.00mm outer diameter. In another example, the area of each copper slot 523 is approximately 80.00mm² to 100.00mm² for a stator with a 50.00mm outer diameter. In some embodiments, a ratio of the area of each copper slot 523 to an outer diameter of the stator is at least 1.6. In some embodiments, a ratio of the area of each copper slot 523 to an outer diameter of the stator is between 1.6 to 2.0. With increased copper in each of the stator windings 540, the motor 500 is capable of producing increased power in a motor having substantially the same motor envelope (e.g., size dimensions) or a smaller motor envelope. In some embodiments, the stator lamination stack 520 has a stator tooth to external wall thickness ratio based on a width, W, of the stator tooth 535 (see FIG. 12) and an external wall thickness, T3. In some embodiments, the stator lamination stack 520 has a stator tooth to external wall thickness ratio of approximately two (2). In some embodiments, the stator lamination stack 520 has a stator tooth to external wall thickness ratio of at least 1.9, where the width, W, of the stator tooth 535 is, for example, 6.12mm and the external wall thickness, T3, is, for example, 3.10mm. In some embodiments, the stator lamination stack 520 has a stator tooth to external wall thickness ratio of between 1.8 and 2.5.

In some embodiments, the stator tooth to external wall thickness ratio of approximately 1.8 to 2.5 (e.g., at least approximately 1.9) is an identified performance feature that enables the motor 500 to deliver higher output and efficiency within a constrained motor envelope. For example, the motor 500 having the stator tooth to external wall thickness ratio of approximately 1.8 to 2.5 (e.g., at least approximately 1.9) increases usable slot volume for copper (e.g., copper fill) while maintaining a sufficiently thick back-iron/external wall to carry working flux without undue saturation, such that the motor 500 can support higher current with lower winding resistance and reduced copper losses. The stator tooth to external wall thickness ratio of approximately 1.8 to 2.5 (e.g., at least approximately 1.9) also preserves a stiff, thermally conductive path from the windings into the lamination stack and outward to the housing, mitigating temperature rise at elevated torque and sustaining performance over the operating range. The stator tooth to external wall thickness ratio of approximately 1.8 to 2.5 (e.g., at least approximately 1.9) represents a deliberate balance among slot utilization, magnetic loading, thermal dissipation, and mechanical robustness that directly underpins the increased power density and improved efficiency described herein.

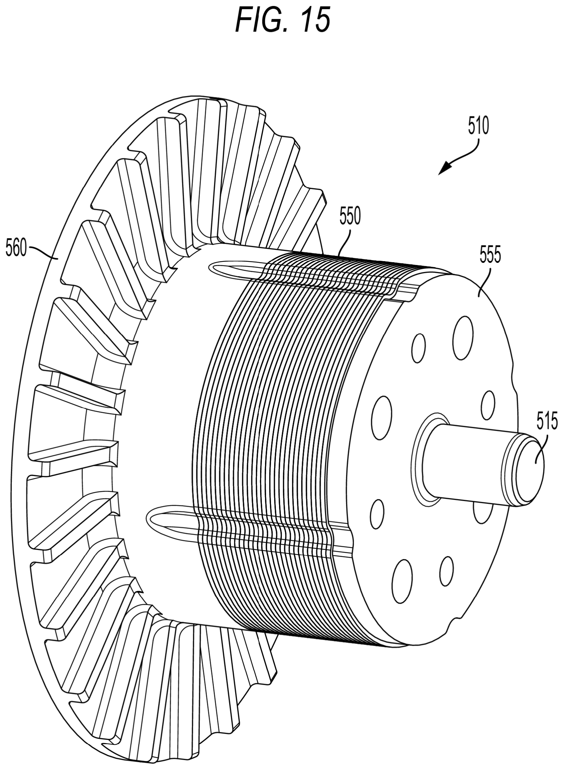

FIG. 15 illustrates a perspective view of the rotor 510 for use in the motor 500. The rotor 510 includes a rotor lamination stack 550, a rotor insulator 555, and the fan 560. In some embodiments, the rotor insulator 555 and the fan 560 are a single molded piece of plastic. In other embodiments, the rotor insulator and the fan 560 are separate molded pieces of plastic molded onto the rotor lamination stack 550.

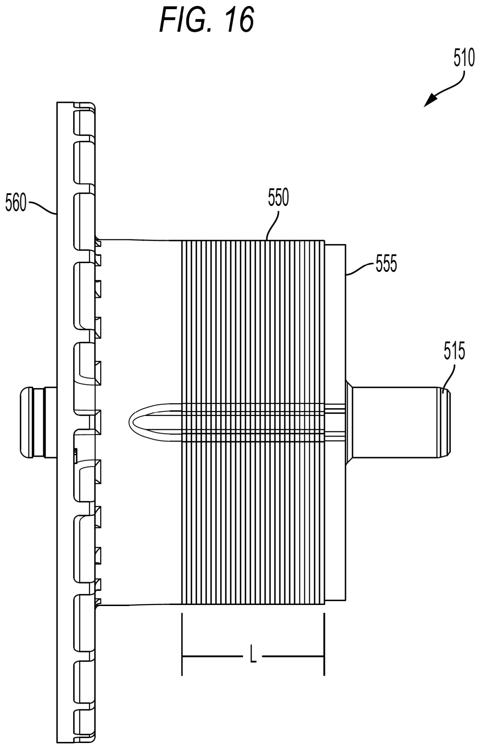

FIG. 16 illustrates a side view of the rotor 510 of the motor 500. In some embodiments, the rotor lamination stack 550 has a length, L, of approximately 8.00mm. In other embodiments, the rotor lamination stack 550 has a length, L, of approximately 10.00mm. In some embodiments, the rotor lamination stack 550 has a length, L, of between approximately 8.00mm to 10.00mm. Compared to a rotor lamination stack that is approximately 10.00mm long, reducing the length of the rotor lamination stack to 8.00mm produces an approximately 20% reduction in the overall length of the motor 500. In other embodiments, the rotor lamination stack 550 has a length of between 6.00mm and 15.00mm (e.g., 12.6mm).

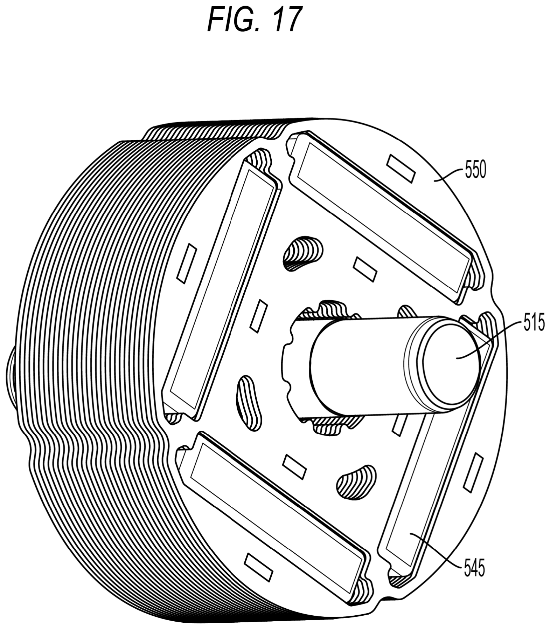

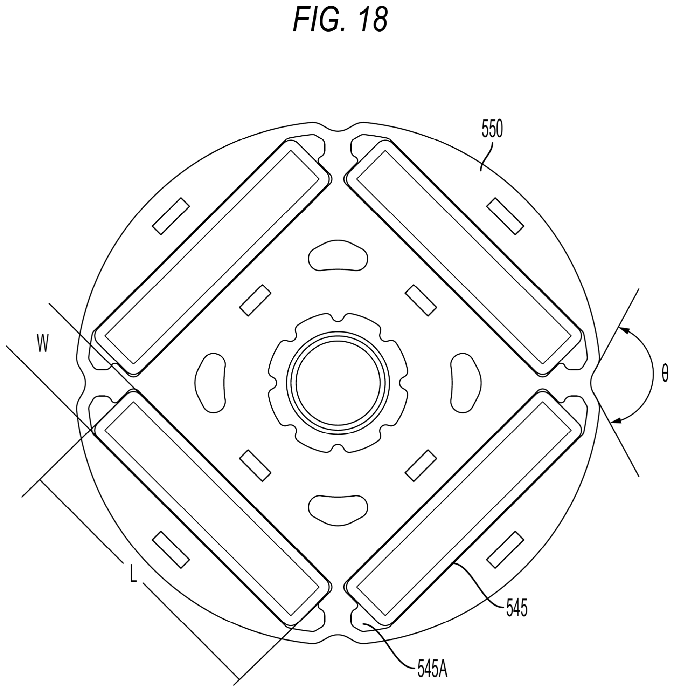

FIG. 17 illustrates a perspective view of the rotor lamination stack 550 of the rotor 510. The rotor lamination stack 550 includes a plurality of magnets 545 (e.g., four magnets). The rotor lamination stack 550 also includes an opening in which the rotor shaft 515 is disposed. With reference to FIG. 18, the rotor lamination stack 550 includes a plurality of magnet slots 545A that are configured to receive the plurality of magnets 545. Each of the magnets 545 has a width, W, and a length, L. In some embodiments, the width, W, of the magnets 545 is at least approximately 3.00mm, and the length, L, of the magnets is approximately 14.00mm (e.g., 6.00mm to 15.00mm). As a result, the motor 500 includes approximately 20% more magnetic material (e.g., rare earth magnetic material) than comparably-sized motors. In some embodiments, the width, W, of the magnets 545 is approximately 5.00mm. In some embodiments, the width, W, of the magnets 545 is approximately 3.00mm to 5.00mm. In some embodiments, the length, L, of the magnets 545 is approximately 16.00mm. In some embodiments, the length, L, of the magnets 545 is approximately 6.00mm to 16.00mm. The rotor lamination stack 550 also includes a plurality (e.g., four) oblique cutouts on an exterior portion of the rotor lamination stack 550. In the illustrated embodiment, the oblique cutouts are positioned between adjacent magnets 545 and have an angle, θ, that is greater than 90°. In some embodiments, the angle, θ, is approximately 120°. The oblique cutouts provide rotor shaping features that can, for example, reduce total harmonic distortion during operation of the motor 500. In some embodiments, the angle, θ, of the oblique cutouts is greater than 90° but less than or approximately equal to 120°. In some embodiments, the diameter of the rotor lamination stack 550 is approximately 26.00mm. In some embodiments, the diameter of the rotor lamination stack 550 varies depending on the outer diameters of the motor 500.

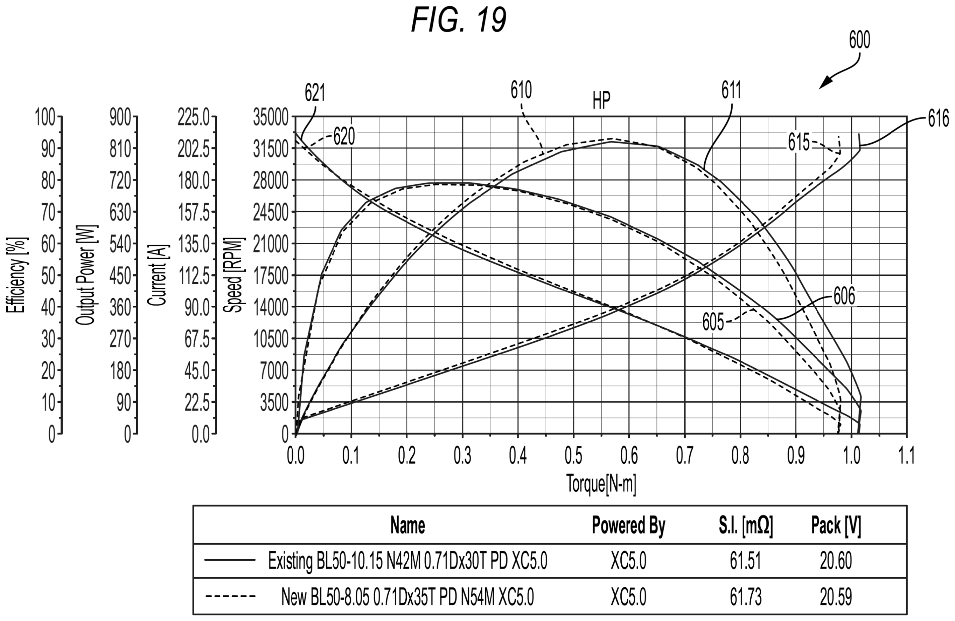

FIG. 19 is a graph 600 illustrating the performance of an existing motor having a stator outer diameter of 50.00mm and a stator lamination stack length of approximately 10.00mm compared to the motor 500 including a stator outer diameter of 50.00mm and a stator lamination stack length of approximately 8.00mm. The graph 600 depicts an efficiency, an output power, a current, and a speed for the existing motor and the motor 500 corresponding to a torque of the motor. The example line plots depict changes in an efficiency 605, an output power 610, a current 615, and a speed 620 for the motor 500, and an efficiency 606, an output power 611, a current 616, and a speed 621 for the existing motor over a range of motor torques of the motor 500 and the existing motor. As illustrated in FIG. 19, the motor 500 including the shorter lamination stack length is capable of producing essentially the same output power and efficiency as the larger existing motor. These improvements in output power and efficiency for a smaller motor 500 compared to a larger existing motor are the result of the modifications described herein related to, for example, stator insulator thickness, increased magnet size, and increased copper in the stator windings 540.

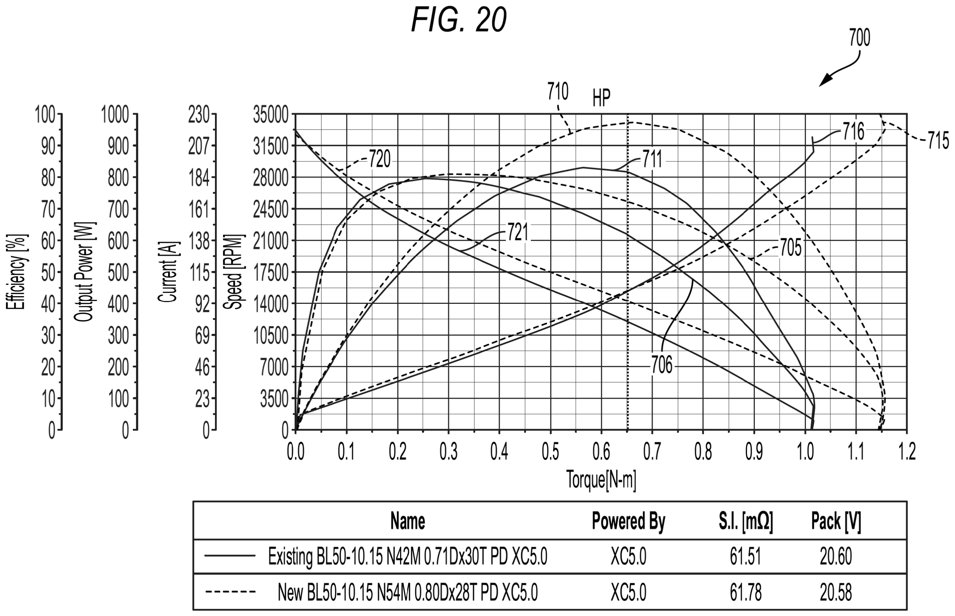

FIG. 20 is a graph 700 illustrating the performance of an existing motor having a stator outer diameter of 50.00mm and a stator lamination stack length of approximately 10.00mm compared to the motor 500 including a stator outer diameter of 50.00mm and a stator lamination stack length of approximately 10.00mm. The graph 700 depicts an efficiency, an output power, a current, and a speed for the existing motor and the motor 500 corresponding to a torque of the motor. The example line plots depict changes in an efficiency 705, an output power 710, a current 715, and a speed 720 for the motor 500, and an efficiency 706, an output power 711, a current 716, and a speed 721 for the existing motor over a range of motor torques of the motor 500 and the existing motor. As illustrated in FIG. 20, the motor 500 including the same lamination stack length is capable of producing approximately 20% more power (i.e., at peak power) and approximately 5-10% greater efficiency than the existing motor. These improvements in output power and efficiency for the same sized motor 500 compared to a comparably-sized existing motor are the result of the modifications described herein related to, for example, stator insulator thickness, increased magnet size, and increased copper in the stator windings 540.

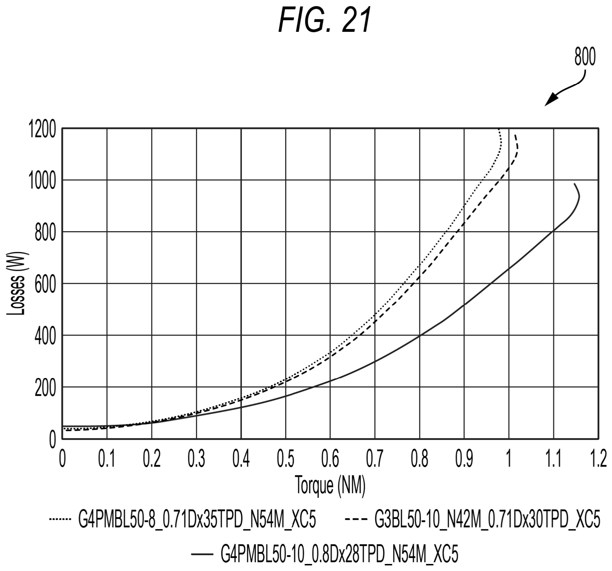

FIG. 21 illustrates the thermal losses of the motor 500 (both with an approximately 8.00mm stator lamination stack length and with an approximately 10.00mm stator lamination stack length) compared to an existing motor having the same stator outer diameter and an approximately 10.00mm stator lamination stack length. As illustrated in FIG. 21, the motor 500 having the smaller 8.00mm stator lamination stack length has approximately the same amount of thermal losses as the existing motor. However, the motor 500 having the 10.00mm stator lamination stack length produced significantly fewer thermal losses with increased torque as the existing motor. For example, at peak power (approximately 0.65Nm of torque), the motor 500 having the 10.00mm stator lamination stack length demonstrates a reduction in thermal losses of approximately 30% compared to the existing motor (e.g., thermal losses reduced from approximately 375W [existing motor] to approximately 250W [motor 500]).

In some embodiments, the rotor lamination stack has a length of between 6.00mm and 15.00mm (e.g., 12.6mm) and the stator lamination stack has a length of between 6.00mm and 15.00mm (e.g., 12.6mm). For motors with these lamination stack lengths (e.g., other than between 8.00mm and 10.00mm), the motors are able to provide similar performance benefits (i.e., increased power, improved efficiency, etc.) as the motors disclosed with 8.00mm and 10.00mm lamination stack lengths.

### REPRESENTATIVE FEATURES

Representative features are set out in the following clauses, which stand alone or may be combined, in any combination, with one or more features disclosed in the text and/or drawings of the specification.

Clause 1. A power tool comprising: a housing; and a motor supported within the housing, the motor including a stator and a rotor, wherein the rotor is disposed within the stator, wherein the stator includes a stator lamination stack including an external wall, a plurality of stator teeth, and a plurality of stator windings, wherein a length of the stator lamination stack is approximately 6.00mm to 15.00mm, wherein the plurality of stator teeth extending radially inward from the external wall, and wherein the rotor including a rotor lamination stack includes a plurality of magnet slots and a plurality of magnets, wherein a length of the rotor lamination stack is approximately 6.00mm to 15.00mm, wherein each magnet of the plurality of magnets is disposed within a magnet slot of the plurality of magnet slots, wherein a ratio of a stator tooth width to an external wall thickness of the stator is approximately 1.8 to 2.5.

Clause 2. The power tool of clause 1, wherein an outer diameter of the stator is approximately 50mm.

Clause 3. The power tool of clause 1, wherein an outer diameter of the stator is selected from a group consisting of: 40mm, 45mm, 60mm, 70mm, and 80mm.

Clause 4. The power tool of clause 1, wherein a width of the plurality of stator teeth is approximately 6.00mm to 7.00mm.

Clause 5. The power tool of clause 1, wherein a height of the plurality of stator teeth is approximately 5.50mm to 7.00mm.

Clause 6. The power tool of clause 1, wherein a thickness of the external wall is less than or equal to approximately 3.10mm.

Clause 7. The power tool of clause 6, wherein the thickness of the external wall is greater than approximately 1.00mm.

Clause 8. The power tool of clause 1, wherein the stator includes a plurality of slots formed by the external wall and the plurality of stator teeth.

Clause 9. The power tool of clause 8, wherein an area of each of slot of the plurality of slots is at least approximately 80.00mm2, and wherein an outer diameter of the stator is approximately 50mm.

Clause 10. The power tool of clause 1, wherein the stator includes a stator insulator covering the stator lamination stack, the stator insulator including an exterior portion and an interior portion.

Clause 11. The power tool of clause 10, wherein a thickness of the exterior portion is less than approximately 0.25mm.

Clause 12. The power tool of clause 10, wherein a thickness of the interior portion is less than approximately 0.20mm.

Clause 13. The power tool of clause 1, wherein a width of the plurality of magnets is approximately 3.00mm to 4.00mm.

Clause 14. The power tool of clause 1, wherein a length of the plurality of magnets is approximately 6.00mm to 15.00mm.

Clause 15. The power tool of clause 1, wherein the ratio of the stator tooth width to the external wall thickness of the stator is approximately 1.9.

Thus, embodiments described herein provide power tool motors including improved motor performance. Although the disclosure has been described in detail with reference to certain preferred embodiments, variations and modifications exist within the scope and spirit of one or more independent aspects of the disclosure as described.

## Claims

1. A power tool comprising:
a housing; and
a motor supported within the housing, the motor including a stator and a rotor, wherein the rotor is disposed within the stator,
wherein the stator includes a stator lamination stack including an external wall, a plurality of stator teeth, and a plurality of stator windings, wherein a length of the stator lamination stack is approximately 6.00mm to 15.00mm, wherein the plurality of stator teeth extending radially inward from the external wall, and
wherein the rotor including a rotor lamination stack includes a plurality of magnet slots and a plurality of magnets, wherein a length of the rotor lamination stack is approximately 6.00mm to 15.00mm, wherein each magnet of the plurality of magnets is disposed within a magnet slot of the plurality of magnet slots,
wherein a ratio of a stator tooth width to an external wall thickness of the stator is approximately 1.8 to 2.5.

2. The power tool of claim 1, wherein an outer diameter of the stator is approximately 50mm.

3. The power tool of claim 1, wherein an outer diameter of the stator is selected from a group consisting of: 40mm, 45mm, 60mm, 70mm, and 80mm.

4. The power tool of claim 1, wherein a width of the plurality of stator teeth is approximately 6.00mm to 7.00mm.

5. The power tool of claim 1, wherein a height of the plurality of stator teeth is approximately 5.50mm to 7.00mm.

6. The power tool of claim 1, wherein a thickness of the external wall is less than or equal to approximately 3.10mm.

7. The power tool of claim 6, wherein the thickness of the external wall is greater than approximately 1.00mm.

8. The power tool of claim 1, wherein the stator includes a plurality of slots formed by the external wall and the plurality of stator teeth.

9. The power tool of claim 8, wherein an area of each of slot of the plurality of slots is at least approximately 80.00mm², and wherein an outer diameter of the stator is approximately 50mm.

10. The power tool of claim 1, wherein the stator includes a stator insulator covering the stator lamination stack, the stator insulator including an exterior portion and an interior portion.

11. The power tool of claim 10, wherein a thickness of the exterior portion is less than approximately 0.25mm.

12. The power tool of claim 10, wherein a thickness of the interior portion is less than approximately 0.20mm.

13. The power tool of claim 1, wherein a width of the plurality of magnets is approximately 3.00mm to 4.00mm.

14. The power tool of claim 1, wherein a length of the plurality of magnets is approximately 6.00mm to 15.00mm.

15. The power tool of claim 1, wherein the ratio of the stator tooth width to the external wall thickness of the stator is approximately 1.9.
